(19) Europäisches Patentamt
European Patent Office
Office européen des brevets

(11) EP 2 536 141 A1

(12) EUROPEAN PATENT APPLICATION

(43) Date of publication:
19.12.2012 Bulletin 2012/51

(51) Int Cl.:
H04N 7/26 (2006.01)          H04N 7/30 (2006.01)
G06T 5/00 (2006.01)

(21) Application number: 11169835.3

(22) Date of filing: 14.06.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: University of Graz
8010 Graz (AT)

(72) Inventors:
• Holler, Mag. Martin
  8045 Graz (AT)
• Bredies, Dr. Kristian
  8010 Graz (AT)

(74) Representative: Matschnig, Franz
Patentanwaltskanzlei Matschnig & Forsthuber
OG
Siebensterngasse 54
1071 Wien (AT)

(54) **Method for the reconstruction of compressed digital image data**

(57)     The invention relates to a method for the reconstruction of digital image data which has been lossy-compressed by transform coding and quantization, comprising the steps of
a) Inputting JPEG-compressed digital image data ($J_{comp}$);
b) Iteratively performing updates of an extended image model, thereby reducing the total generalized variation functional constrained to all images matching the transform coded, quantized data;
c) Outputting a decompressed digital image (u).

Fig. 2

EP 2 536 141 A1

**Description**

Field of the invention and description of prior art

The invention relates to a method for the reconstruction of compressed digital image data which has been lossy-compressed by transform coding and quantization.

With the expanding use of data communication and increasing computer processing power the need for efficient methods to store and transmit image data is omnipresent. In order to do so image compression is of paramount importance.

A fundamental goal of image compression is to reduce the amount of data necessary to represent an image while maintaining acceptable image quality and correctly reconstructing the original (i.e., uncompressed) image. On the other hand, it is important to compress and decompress image data using few international standards so that communication and transfer of image data between different operating systems and equipment solutions is possible.

There are lots of different standards available today, e.g. JPEG (Joint Photographic Experts Group), JPEG2000, JBIG (Joint Bilevel Image Group), GIF (Graphics Interchange Format) and PNG (Portable Network Graphics), to name only a few. The following considerations are based on the JPEG-standard because it is the most commonly used method for compression in the digital domain. However, it has to be noted that the solution according to the invention as described below is applicable to different compression and decompression methods.

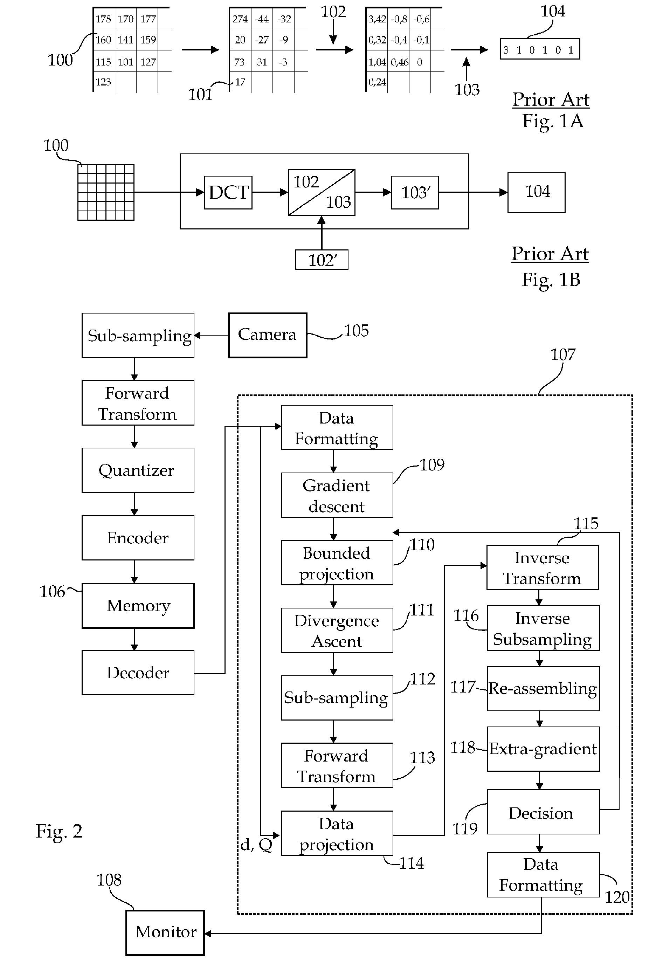

As an introduction to the area of image decompression the JPEG-standard ISO/IEC 10918-1:1994 is explained briefly as an example: Fig. 1A shows an exemplary flow-chart of how a digital uncompressed representation of an original image 100 is transformed into a representation 101 that allows identifying and excluding data that is not necessary for visual perception like high frequency variations of colour and intensity. The numbers in Fig. 1A are arbitrary and serve to give a rough idea of what happens to image data while JPEG-compression.

The transformation is achieved by quantising (step 102) the data and subsequently rounding (step 103) it to integers. Since many possible real numbers are rounded to the same integer the rounded compressed data 104 does not represent the one original image 100 but a set of possible original images. The resulting information is then compressed and stored without further losses.

Fig. 1B shows a supplemental block diagram of abovementioned JPEG-compression. Source image data 100 is compressed by firstly applying a DCT (Discrete Cosine Transformation) on 8 x 8-blocks of the data. Subsequently, the data is quantized 102, using a quantization table 102', and rounded 103, followed by a lossless compression 103' resulting in the lossy-compressed transform coded quantized data 104.

By direct inversion of this process standard reconstruction techniques reconstruct only the image that would directly lead to integer coefficients anyway. Said techniques do not take into account that the inverted data results from a rounding process.

Hence, the JPEG-standard for digital images (ISO/IEC 10918-1:1994) is lossy, that is, not the entire original image is stored but only the data that is critical to the visual impression. This allows for a higher compression rate but leads to errors - so called artifacts - in the reconstructed image negatively affecting the image quality when conventional reconstruction techniques are used.

In order to compensate for abovementioned errors conventional reconstruction techniques apply postprocessing measures - by that means quality may be increased but the reconstructed image differs from the original image because postprocessing may change the data.

A solution that accounts for this problem is presented in US 5,534,925: Here, it is acknowledged that a JPEG-compressed image comprises many images that are consistent with the given information. Hence, the reconstructed image is selected from all images matching the data as the image that minimizes the sum of the difference of each pixel to its neighbouring pixels. In the context of a transform-quantization coding it is stated that the optimal reconstruction is a nonlinear optimization with linear inequality constraints. The most successful criterion used for image processing is minimizing oscillation - minimizing the total variation with constraints minimizes oscillations while maintaining the edges of structures in the image sharp. This, however, leads to stairstepping-effects (aliasing-effects) negatively influencing image quality. Hence, it is suggested to cancel the algorithm after a few iterations.

Summary of the invention

The invention sets out to overcome the above-mentioned shortcomings of the prior art by providing a method that reconstructs lossy-decompressed image data so that it is close to the original data with a minimum amount of errors.

This task is solved by a method according to the invention, comprising the steps of

a) Inputting a lossy-compressed digital image data;

b) Iteratively performing updates of an extended image model, thereby reducing the total generalized variation functional constrained to all images matching the transform coded, quantized data;

c) Outputting a decompressed digital image.

By virtue of this solution it is possible not to amend a reconstructed image in order to enhance its quality, but merely to choose the optimal image from the set of possible images - the method accounts for the fact that a JPEG-compressed image may emanate from a large set of original images and that this information is lost if not considered during reconstruction.

The total generalized variation model is discussed, e.g., in the article "Total Generalized Variation" by Bredies et al., Society for Industrial and applied Mathematics - J. Imaging Sciences, 2010, Vol. 3, No. 3, pp. 492-526. The disclosure of said article is enclosed to this specification by reference.

The invention relates to a method for optimal and artifact-free reconstruction of digital image data compressed by transform coding and quantization. The image data may come from a digital camera, e.g. in a mobile phone, but also application in web browsers or video streams to increase image quality is possible. The reproduction process iteratively performs updates of an extended image model, represented by primal and dual variables, respectively, thereby reducing the total generalized variation functional constrained to all images matching the transform coded, quantized data.

This method does not post process decompressed data but reconstructs an image fitting the compressed data. By application of the novel TGV-model an image is selected automatically that comes very close to the original image.

The method allows for a quick and optimal reconstruction of a compressed JPEG-image with the reconstruction being guaranteed by the mathematical validity of the TGV-model and by convex analysis. The method does not have the drawbacks of existing methods.

In step a) coefficient data (d) and quantization data (Q) is obtained from the lossy transform-coded digital image data ($J_{comp}$) and the coefficient data (d) is dequantized. This is, for instance, a standard procedure when opening a JPEG-compressed image. The quantization data (Q) usually is provided in the form of a table.

Coefficient data here denotes the quantized DCT (Discrete cosine transformation)-coefficient matrices for each color component or the brightness component in case of color- and grey-scale images, respectively. In case of a color image the matrices can be seen as three scalar-valued matrices corresponding to greyscale data. The quantization data is a composition of quantization matrices corresponding to the three color components or the brightness component.

In a variant of the invention, in step b) the extended image model comprises an image, an extended image, a first dual variable and a second dual variable, an extragradient image and an extragradient extended image.

Coefficient and quantization data allow description of a coefficient data set and, consequently, an image data set.

In a variant of the invention, step b) comprises the following sub-steps:

b0) Initializing image data (u), extended image data (v), extragradient image data ($\bar{u}$) extragradient extended image data ($\bar{v}$), a two-vector valued matrix (p) and a three-vector valued matrix (q) which are used as a starting point for the iteration procedure in steps b1) to b8);

b1) Applying a gradient evaluation and a summation/multiplication operation on the extragradient image data ($\bar{u}$), the extragradient extended image data ($\bar{v}$) and the two-vector valued matrix (p), thereby updating the two-vector valued matrix (p) and then applying a projection operation on said matrix (p) in a way that its norm ($n1_{i,j}$) is less or equal to a first parameter ($\alpha_1$) and each two-vector entry of the two-vector valued matrix (p) is modified accordingly;

b2) Applying a higher dimensional gradient evaluation and a summation/multiplication operation on the extragradient extended image data ($\bar{v}$) and the three-vector valued matrix (q), thereby updating the results in the three-vector valued matrix (q) and then applying a projection operation on said matrix (q) in a way that its norm ($n2i_{,j}$) is less or equal to a second parameter ($\alpha_0$) and each three-vector entry of the three-vector valued matrix (q) is modified accordingly;

b3) Applying a divergence operator and a summation/multiplication operation on the image data (u) and the two-vector valued matrix (p) of step b1), storing the data in a first new set of image data ($u_{new}$);

b4) Applying a divergence operator and a summation/multiplication operation on the extended image data (v), the two-vector valued matrix (p) of step b1) and the three-vector-valued matrix (q) of step b2), storing the data in a second new set of image data ($v_{new}$);

b5) Updating the first new set of image data ($u_{new}$) pf step b3) by applying a sub-sampling operation S, a component-wise block-wise discrete cosine transformation and a projection operation on the first new set of image data, followed by an inverse component-wise block-cosine transformation IBDCT, an up-sampling operation S-1 and a summation operation;

b6) Updating the extragradient image data ($\bar{u}$) and the extragradient extended image data ($\bar{v}$) by an extragradient-update step using the image data (u), extended image data (v), first ($u_{new}$) and second new set of image data ($v_{new}$);

b7) Overwriting image data (u) and extended image data (v) with of the first ($u_{new}$) and second new set of image data ($v_{new}$), respectively, resulting from the steps b1) to b6);

b8) Evaluating a stopping-criterion;

b9) Reiterating steps b1) to b8) if stopping criterion is not fulfilled or proceeding to step c) if stopping criterion is fulfilled.

The two-vector valued matrix (p) and the three-vector valued matrix (q) are abovementioned first and second dual variable, respectively.

In step b0) different types of starting images may be used. In principle, any initialization is suitable, as for example also an image $\bar{u} = 0$, however, in a variant of the invention a standard-decompressed image is selected, performing an inverse component-wise block-cosine transformation IBDCT and an up-sampling operation S-1 on the dequantized data (d).

In a variant of the invention in step b1) the gradient-evaluation maps extragradient image data ($\bar{u}$) to a two-vector-valued matrix with the entries being defined as follows:

$$\left(\nabla \vec{\bar{u}}\right)_{i,j}^{n,1} = \left(\delta_{x+}\bar{u}^n\right)_{i,j},$$

and

$$\left(\nabla \vec{\bar{u}}\right)_{i,j}^{n,2} = \left(\delta_{y+}\bar{u}^n\right)_{i,j},$$

with $0 \leq i < 8k$ and $0 \leq j < 8l$, k and 1 corresponding to the vertical and horizontal number of 8 x 8 data blocks and n=1, 2, 3, the operators each resulting in a scalar-valued matrix with

$$\left(\delta_{x+}\bar{u}\right)_{i,j} = \begin{cases} \left(\bar{u}_{i+1,j} - \bar{u}_{i,j}\right) & if \ 0 \leq i < 8k-1, \\ 0 & if \ i = 8k-1, \end{cases} \text{ and}$$

$$\left(\delta_{y+}\bar{u}\right)_{i,j} = \begin{cases} \left(\bar{u}_{i,j+1} - \bar{u}_{i,j}\right) & if \ 0 \leq j < 8l-1, \\ 0 & if \ j = 8l-1 \end{cases} \text{ and}$$

the summation/multiplication operation yields a two-vector valued matrix (p) with

$$p_{i,j}^{m,n} = p_{i,j}^{m,n} + \sigma\left(\left(\nabla \vec{\bar{u}}\right)_{i,j}^{m,n} - \bar{v}_{i,j}^{m,n}\right),$$

$_\sigma$ being a first scalar and $\overline{v}_{i,j}^{m,n}$ being the extragradient extended image data $(\overline{\overline{v}})$.

In yet another variant of the invention, in step b1) the modification of the two-vector valued matrix $\left(p_{i,j}^{m,n}\right)$ is

calculated with $\quad p_{i,j}^{m,n} = \dfrac{p_{i,j}^{m,n}}{\max\left\{1, \dfrac{n1_{i,j}}{\alpha_1}\right\}}$ , $\quad \alpha_1$ being a first parameter and n1 being a norm.

The norm (n1$_{i,j}$) is calculated as $\quad n1_{i,j} = \sqrt{\left(p_{i,j}^{1,1}\right)^2 + \left(p_{i,j}^{2,1}\right)^2 + \left(p_{i,j}^{3,1}\right)^2 + \left(p_{i,j}^{1,2}\right)^2 + \left(p_{i,j}^{2,2}\right)^2 + \left(p_{i,j}^{3,2}\right)^2}$ .

This is one possible norm given by the TGV-model.

In step b2) the higher dimensional gradient evaluation maps extragradient extended image data ($\overline{v}$) to a three-vector valued matrix being defined as follows:

$$\left(\varepsilon\overline{\overline{v}}\right)_{i,j} = \left( \begin{pmatrix} \left(\delta_{x_-}\overline{v}^{1,1}\right)_{i,j} \\ \left(\delta_{x_-}\overline{v}^{2,1}\right)_{i,j} \\ \left(\delta_{x_-}\overline{v}^{3,1}\right)_{i,j} \end{pmatrix}, \begin{pmatrix} \left(\delta_{y_-}\overline{v}^{1,2}\right)_{i,j} \\ \left(\delta_{y_-}\overline{v}^{2,2}\right)_{i,j} \\ \left(\delta_{y_-}\overline{v}^{3,2}\right)_{i,j} \end{pmatrix}, \begin{pmatrix} \left(\dfrac{\delta_{y_-}\overline{v}^{1,1} + \delta_{x_-}\overline{v}^{1,2}}{2}\right)_{i,j} \\ \left(\dfrac{\delta_{y_-}\overline{v}^{2,1} + \delta_{x_-}\overline{v}^{2,2}}{2}\right)_{i,j} \\ \left(\dfrac{\delta_{y_-}\overline{v}^{3,1} + \delta_{x_-}\overline{v}^{3,2}}{2}\right)_{i,j} \end{pmatrix} \right),$$

the operators being defined as

$$\left(\delta_{x_-}\overline{v}\right)_{i,j} = \begin{cases} -\overline{v}_{i-1,j} & if\ i = 8k-1 \\ \left(\overline{v}_{i,j} - \overline{v}_{i-1,j}\right) & if\ 0 < i < 8k-1 \\ \overline{v}_{i,j} & if\ i = 0 \end{cases} \quad and \quad \left(\delta_{y_-}\overline{v}\right)_{i,j} = \begin{cases} -\overline{v}_{i,j-1} & if\ i = 8l-1 \\ \left(\overline{v}_{i,j} - \overline{v}_{i,j-1}\right) & if\ 0 < j < 8l-1, \\ \overline{v}_{i,j} & if\ j = 0. \end{cases}$$

and the summation/multiplication operation yields a three-vector valued matrix $\left(q_{i,j}^{m,n}\right)$ with

In step b2) the the modification of the three-vector valued matrix $\left(q_{i,j}^{m,n}\right)$ is calculated with

$q_{i,j}^{m,n} = \dfrac{q_{i,j}^{m,n}}{\max\left\{1, \dfrac{n2_{i,j}}{\alpha_0}\right\}}$ , $\alpha_0$ being a second parameter and n2 being a norm. Here, the norm (n2$_{i,j}$) is calculated with

$n2_{i,j} = \sqrt{\left(q_{i,j}^{1,1}\right)^2 + \left(q_{i,j}^{2,1}\right)^2 + \left(q_{i,j}^{3,1}\right)^2 + \left(q_{i,j}^{1,2}\right)^2 + \left(q_{i,j}^{2,2}\right)^2 + \left(q_{i,j}^{3,2}\right)^2 + 2\left(\left(q_{i,j}^{1,3}\right)^2 + \left(q_{i,j}^{2,3}\right)^2 + \left(q_{i,j}^{3,3}\right)^2\right)}$ . This is yet another possible norm given by the TGV-model.

The first and second parameter $\alpha_0$ and $\alpha_1$ have to fulfil the condition $\alpha_0, \alpha_1 > 0$.

In a variant of the invention in step b3) a divergence operator is applied to the two-vector valued matrix $\left(p_{i,j}^{m,n}\right)$ of step b1) as follows: $(div\ \vec{p})_{i,j}^{n} = \left(\delta_{x-}p^{n,1}\right)_{i,j} + \left(\delta_{y-}p^{n,2}\right)_{i,j}$, and the summation/multiplication operation yields a first new set of image data $(\vec{u}_{new})$ as a vector-valued matrix with

$$(u_{new})_{i,j}^{n} = u_{i,j}^{n} + \tau(div\ \vec{p})_{i,j}^{n},$$

$\tau$ being a second scalar.

Furthermore, in step b4) a divergence operator is applied to the three-vector valued matrix $\left(q_{i,j}^{m,n}\right)$ of step b2) as follows:

$$(div\ \vec{q})_{i,j}^{n,1} = \left(\delta_{x+}q^{n,1}\right)_{i,j} + \left(\delta_{y+}q^{n,3}\right)_{i,j},$$

$$(div\ \vec{q})_{i,j}^{n,2} = \left(\delta_{x+}q^{n,3}\right)_{i,j} + \left(\delta_{y+}q^{n,2}\right)_{i,j}$$

and the summation/multiplication operation yields a second new set of image data $(\vec{v}_{new})$ as a two-vector valued matrix with

$$(v_{new})_{i,j}^{m,n} = v_{i,j}^{m,n} + \tau\left(\vec{p} + div\ \vec{q}\right)_{i,j}^{m,n}.$$

For abovementioned variables it holds that the first ($\sigma$) and the second scalar ($\tau$) satisfy the condition $\sigma\tau \leq \dfrac{1}{12}$.

In a variant of the invention, in step b5) a sub-sampling operation is applied to the first new set of image data $(\vec{u}_{new})$ resulting in scalar-valued matrices as follows:

$$\left(S\ \vec{u}_{new}\right)_{i,j}^{1} = \frac{k_1 l_1}{kl} \sum_{m=i\frac{k}{k_1}}^{(i+1)\frac{k}{k_1}-1} \sum_{n=j\frac{l}{l_1}}^{(j+1)\frac{l}{l_1}-1} (u_{new})_{n,m}^{1},$$

$$\left(S\ \vec{u}_{new}\right)_{i,j}^{2} = \frac{k_2 l_2}{kl} \sum_{m=i\frac{k}{k_2}}^{(i+1)\frac{k}{k_2}-1} \sum_{n=j\frac{l}{l_2}}^{(j+1)\frac{l}{l_2}-1} (u_{new})_{n,m}^{2},$$

$$\left(S\vec{u}_{new}\right)^3_{i,j} = \frac{k_3 l_3}{kl} \sum_{m=i\frac{k}{k_3}}^{(i+1)\frac{k}{k_3}-1} \sum_{n=j\frac{l}{l_3}}^{(j+1)\frac{l}{l_3}-1} \left(u_{new}\right)^3_{n,m}$$

with $k_1$, $l_1$, $k_2$, $k_3$, $l_2$, $l_3$ being the sub-sampled image size parameters, then a component-wise block-wise discrete cosine transformation is performed resulting in scalar-valued matrices $\left(BDCT\left(S\vec{u}_{new}\right)\right)^1$, $\left(BDCT\left(S\vec{u}_{new}\right)\right)^2$ and $\left(BDCT\left(S\vec{u}_{new}\right)\right)^3$ which are then processed in a projection operation with

$$proj_{d,Q}\left(BDCT\left(S\vec{u}_{new}\right)\right)^n_{i,j} = BDCT\left(S\vec{u}_{new}\right)^n_{i,j} - \max\left\{0, BDCT\left(S\vec{u}_{new}\right)^n_{i,j} - \left(d^n_{i,j} + \frac{1}{2}\right)Q^n_{i,j}\right\} +$$

$$+ \max\left\{0, \left(d^n_{i,j} - \frac{1}{2}\right)Q^n_{i,j} - BDCT\left(S\vec{u}_{new}\right)^n_{i,j}\right\} \qquad \text{for}$$

n=1, 2, 3, resulting in three scalar-valued matrices which are then inversely transformed IBDCT and inversely sub-sampled $S^{-1}$, resulting in

$$proj_D\left(\vec{u}_{new}\right)^n_{i,j} = \left(u_{new}\right)^n_{i,j} + \left(S^{-1}\left(IBDCT\left(proj_{d,Q}\left(\left(S\vec{u}_{new}\right)\right)\right) - S\vec{u}_{new}\right)\right)^n_{i,j}$$

which is then stored as first new set of image data $\left(\vec{u}_{new}\right)$.

The extragradient update-step is performed by processing image data $\left(\vec{u}, \vec{v}\right)$ and the first $\left(\vec{u}_{new}\right)$ and second new set of image data $\left(\vec{v}_{new}\right)$ as follows:

$$\bar{u}^n_{i,j} = 2\left(u_{new}\right)^n_{i,j} - u^n_{i,j},$$

$$\bar{v}^{m,n}_{i,j} = 2\left(v_{new}\right)^{m,n}_{i,j} - v^{m,n}_{i,j}$$

resulting in new sets of extragradient image data $\left(\bar{\vec{u}}\right)$ and extragradient extended image data $\left(\bar{\vec{v}}\right)$.

The method according to the invention is applicable on different types of images. The JPEG-compressed digital image data ($J_{comp}$) may be

- a greyscale image consisting of a matrix ($u_{i,j}$), each matrix element indicating the intensity of the respective pixel, or

- a color image in an RGB-color-space-setting consisting of a three-vector valued matrix $\left(\left(\vec{u}_{i,j}\right) = \begin{pmatrix} u^1_{i,j} \\ u^2_{i,j} \\ u^3_{i,j} \end{pmatrix}\right)$, each

matrix vector indicating the amount of Red, Green and Blue light in the corresponding (i, j)-th pixel of the image, or

- a color image in an YCbCr-color-space-setting consisting of a three-vector valued matrix

$$\mathrm{matrix}\left(\left(\vec{u}_{i,j}\right)=\begin{pmatrix} u_{i,j}^1 \\ u_{i,j}^2 \\ u_{i,j}^3 \end{pmatrix}\right),$$ the matrix vectors indicating the brightness, the blue-difference and the red-difference of the corresponding pixel.

Brief description of the drawings

In the following, the present invention is described in more detail with reference to the drawings, which show:

Fig.1A a flow-chart of conventional JPEG-compression (prior art) according to ISO/IEC 10918-1:1994;

Fig. 1B a block-diagramm of conventional JPEG-compression (prior art) of Fig. 1A, and

Fig. 2 a flow-chart of the method according to the invention.

Detailed description of the invention

It should be appreciated that the invention is not restricted to the following embodiment which merely represents one of the possible implementations of the invention. Furthermore, it is noted that the representations in the figures are only schematic for the sake of simplicity.

Fig. 2 shows a flow-chart of the method according to the invention. An arbitrary camera device 105 captures an image which is subsequently JPEG-compressed including the steps of sub-sampling, forward transforming, quantization and encoding. It has to be noted that JPEG-compression is only one of many possible compression methods - the method is not limited to JPEG, this standard is merely chosen here because it is most commonly used. The digital image data is then stored in an adequate memory 106. The reconstruction method according to the invention may be performed in a dedicated reconstruction processor 107 as indicated in Fig. 2 by the dashed line.

A suited algorithm for the implementation of the method according to the invention is based on a primal-dual algorithm as presented by Chambolle and Pock in "A first-order primal-dual algorithm for convex problems with applications in imaging", Journal of Mathematical Imaging and Vision, Vol 40, Issue 1, pp 120-145.

The method according to the invention allows for optimal and artifact-free reconstruction of digital image data compressed by transform coding and quantization. The reproduction process iteratively performs updates of an extended image model, represented by primal and dual variables, respectively, thereby reducing the total generalized variation functional constrained to all images matching the transform coded, quantized data.

The process uses the primal variable to store pixel wise image information as well as an approximation of the difference of neighbouring pixels, the proximal difference image. It uses the dual variable to store dual information for the proximal difference image as well as dual information for the differences of the neighbouring image, the higher-order proximal difference image. Furthermore, pixel wise algebraic operations, difference operations for neighbouring pixels, the coding transform as well as projections are utilized to perform updates of the primal and dual variable.

The method treats the compressed JPEG-image as a set of possible original images and selects a suitable image from said set. It comprises the automated implementation of such a selection process by application of the TGV-model and execution of a suited minimization-algorithm.

Summarizing, the method according to the invention allows reading of a saved JPEG-image, processing of the data of and optimal reconstruction of the data.

This may happen automatically on a personal computer, with the user opening an image file and thereby initializing abovementioned method.

In the following, the method according to the invention is explained in an embodiment where it is applied to a digital color image. The invention, however, is also applicable to a greyscale image. By and large, the difference between the approaches lies in vector-values as opposed to scalar values forming the image data.

A digital color image of the size 8k x 8l pixel is processed as a vector-valued matrix denoted by $\left(\vec{u}_{i,j}\right)_{0\le i<8k,\,0\le j<8l}$. In case of a greyscale image there would be scalar values instead of vectors. The horizontal and vertical pixel numbers are assumed to be multiples of eight times the subsampling factors for color components.

The values k and l are multiples of $k_1$, $k_2$, $k_3$ and $l_1$, $l_2$, $l_3$, respectively, which depend on the subsampling (see below) performed during the compression process of a JPEG-image. Typical values are $k_1=k$, $k_2=k_3=k/2$ and $l_1=l$ and

$l_2=l_3=l/2$.

This choice of $k_1$, $k_2$, $k_3$ and $l_1$, $l_2$, $l_3$ illustrates the case where the first component is not sub-sampled, but the other components are. Other variants are possible as well with different values for the respective items.

The vector-valued matrix can be visualized by

$$\vec{u}_{i,j} = \begin{pmatrix} \vec{u}_{0,0} & \vec{u}_{0,1} & \vec{u}_{0,2} & \cdots & \vec{u}_{0,8l-1} \\ \vec{u}_{1,0} & \vec{u}_{1,1} & & & \vec{u}_{1,8l-1} \\ \vec{u}_{2,0} & & & & \vdots \\ \vdots & & & & \\ \vec{u}_{8k-1,0} & \cdots & & & \vec{u}_{8k-1,8l-1} \end{pmatrix}$$

where the value of each entry defines the color of the corresponding pixel. In case of a greyscale image each entry of the matrix would be a single scalar value reproducing the intensity of the respective pixel.

Here, each matrix entry $\vec{u}_{i,j}$, for $0 \leq i < 8k$, $0 \leq j < 8l$, consists of a three-dimensional vector, i.e. $\vec{u}_{i,j} = \begin{pmatrix} u_{i,j}^1 \\ u_{i,j}^2 \\ u_{i,j}^3 \end{pmatrix}$.

U can be defined as the set of all color images, i.e.

$$U = \left\{ (\vec{u}_{i,j})_{0 \leq i < 8k, \, 0 \leq j < 8l} = (u_{i,j}^1, u_{i,j}^2, u_{i,j}^3)_{0 \leq i < 8k, \, 0 \leq j < 8l} \right\}.$$

In a standard RGB color space setting, the three entries $u_{i,j}^1, u_{i,j}^2, u_{i,j}^3$ represent the amount of Red, Green, and Blue light, respectively, in the corresponding (i, j)-th pixel of the image. However, JPEG-images are typically processed in a YCbCr color space setting.

This means the first line denotes the brightness of the corresponding pixel while the entries of the second and third line describe the blue-difference and the red-difference, respectively.

This is an equivalent color space setting and images given in either RGB- or YCbCr-color space setting can easily be transformed to the other one. Naturally, other color space settings are possible.

The JPEG-standard commonly uses the YCbCr-color space setting because the human eye is less sensitive to color variations than brightness variations. Hence, the color components of a JPEG compressed image $(u_{i,j}^2, u_{i,j}^3)$ are typically saved with a lower resolution than the brightness component $u_{i,j}^1$, allowing for smaller files. This is called color subsampling and must be taken into account in the decompression process. However, the JPEG standard also allows processing images in the RGB-color space, but then typically no color subsampling is performed because no color channel should be preferred to the others.

As a first step in the reconstruction process data formatting is performed in the reconstruction processor 107. This means that the data necessary for the reconstruction is obtained from the JPEG-compressed image and variables used in the process are initialized.

Besides image data $(\vec{u}_{i,j})_{0 \leq i < 8k, \, 0 \leq j < 8l}$ two other types of higher dimensional objects are used in the decompression process.

The first type is a two-vector valued matrix denoted by $(\vec{v}_{i,j})_{0 \leq i < 8k, \, 0 \leq j < 8l}$, where

$$\vec{v}_{i,j} = \left(\vec{v}_{i,j}^1, \vec{v}_{i,j}^2, \vec{v}_{i,j}^3\right) = \left(\begin{pmatrix} v_{i,j}^{1,1} \\ v_{i,j}^{2,1} \\ v_{i,j}^{3,1} \end{pmatrix}, \begin{pmatrix} v_{i,j}^{1,2} \\ v_{i,j}^{2,2} \\ v_{i,j}^{3,2} \end{pmatrix}\right).$$

The second type is a three-vector valued matrix denoted by $\left(\vec{w}_{i,j}\right)_{0 \le i < 8k,\, 0 \le j < 8l}$, where

$$\vec{w}_{i,j} = \left(\vec{w}_{i,j}^1, \vec{w}_{i,j}^2, \vec{w}_{i,j}^3\right) = \left(\begin{pmatrix} w_{i,j}^{1,1} \\ w_{i,j}^{2,1} \\ w_{i,j}^{3,1} \end{pmatrix}, \begin{pmatrix} w_{i,j}^{1,2} \\ w_{i,j}^{2,2} \\ w_{i,j}^{3,2} \end{pmatrix}, \begin{pmatrix} w_{i,j}^{1,3} \\ w_{i,j}^{2,3} \\ w_{i,j}^{3,3} \end{pmatrix}\right).$$

These objects play a role in the internal decompression process and are not crucial for the method according to the invention; however, they are needed to store higher dimensional data resulting from operations on the image.
From a JPEG-compressed object further information can be obtained, namely the following data:

$$\vec{d} = \begin{pmatrix} d^1 \\ d^2 \\ d^3 \end{pmatrix} \text{ and } \vec{W} = \begin{pmatrix} W^1 \\ W^2 \\ W^3 \end{pmatrix}.$$

$d^1$, $d^2$ and $d^3$ are the quantized DCT (Discrete Cosine Transformation)-coefficient matrices for each color component with $d^1 = (d_{i,j}^1)_{0 \le i < 8k_1,\, 0 \le j < 8l_1}$, $d^2 = (d_{i,j}^2)_{0 \le i < 8k_2,\, 0 \le j < 8l_2}$ and $d^3 = (d_{i,j}^3)_{0 \le i < 8k_3,\, 0 \le j < 8l_3}$. This is equivalent to three grey-scale matrices which correspond to scalar-valued matrices.
As mentioned above the values k and l are multiples of $k_1$, $k_2$, $k_3$ and $l_1$, $l_2$, $l_3$, respectively, which depend on the color subsampling performed during the compression process of a JPEG-image. Typical values are $k_1 = k$, $k_2 = k_3 = k/2$ and $l_1 = l$, $l_2 = l_3 = l/2$. The quantization matrix $\vec{W}$ is a composition of the quantization matrices $W^1 = (W_{i,j}^1)_{0 \le i < 8,\, 0 \le j < 8}$, $W^2 = (W_{i,j}^2)_{0 \le i < 8,\, 0 \le j < 8}$ and $W^3 = (W_{i,j}^3)_{0 \le i < 8,\, 0 \le j < 8}$ corresponding to the three color components. The quantization matrices $W^1$, $W^2$ and $W^3$ are uniform for the entire image, i.e., in the compression process, the data corresponding to each color component is split into blocks of size 8 x 8 and then each of these blocks is divided by the same color-dependent quantization matrix $W^n$, $1 \le n \le 3$.
In order to keep the notation as simple as possible these quantization matrices of size 8 x 8 are extended to the size of the data for the corresponding color component in the following. To illustrate this measure the quantization matrices are now denoted by $Q^1 = (Q_{i,j}^1)_{0 \le i < 8k_1,\, 0 \le j < 8l_1}$, $Q^2 = (Q_{i,j}^2)_{0 \le i < 8k_2,\, 0 \le j < 8l_2}$ and

$$Q^3 = (Q^3_{i,j})_{0 \le i < 8k_3,\, 0 \le j < 8l_3} \text{ where, for example, } Q^1 = \begin{pmatrix} W^1 & W^1 & \cdots & W^1 \\ W^1 & & & \vdots \\ \vdots & & & \\ W^1 & \cdots & & W^1 \end{pmatrix} \text{ and analogously for Q}^2 \text{ and Q}^3. \; \vec{Q}$$

is then defined to be a matrix obtained as a composition of Q$^1$, Q$^2$ and Q$^3$, i.e.,

$$\vec{Q} = \begin{pmatrix} Q^1 \\ Q^2 \\ Q^3 \end{pmatrix}.$$

Using the given data d and Q a coefficient data set D and an image data set $U_D$ can be described.

While the sets D and $U_D$ are essential for the motivation of the decompression process and also for some steps performed during the process they will not be needed or saved explicitly in the algorithm of the method according to the invention.

Firstly, data intervals $J^1 = (J^1_{i,j})_{0 \le i < 8k_1,\, 0 \le j < 8l_1}$, $J^2 = (J^2_{i,j})_{0 \le i < 8k_2,\, 0 \le j < 8l_2}$ and $J^3 = (J^3_{i,j})_{0 \le i < 8k_3,\, 0 \le j < 8l_3}$ are calculated which are defined by

$$J^1_{i,j} = \left[ d^1_{i,j}\, Q^1_{i,j} - \frac{Q^1_{i,j}}{2}, d^1_{i,j}\, Q^1_{i,j} + \frac{Q^1_{i,j}}{2} \right] \text{ for } 0 \le i < 8k_1,\, 0 \le j < 8l_1,$$

$$J^2_{i,j} = \left[ d^2_{i,j}\, Q^2_{i,j} - \frac{Q^2_{i,j}}{2}, d^2_{i,j}\, Q^2_{i,j} + \frac{Q^2_{i,j}}{2} \right] \text{ for } 0 \le i < 8k_2,\, 0 \le j < 8l_2, \text{ and}$$

$$J^3_{i,j} = \left[ d^3_{i,j}\, Q^3_{i,j} - \frac{Q^3_{i,j}}{2}, d^3_{i,j}\, Q^3_{i,j} + \frac{Q^3_{i,j}}{2} \right] \text{ for } 0 \le i < 8k_3,\, 0 \le j < 8l_3.$$

The interval $J^n_{i,j}$ is just the interval of all data values $z^n_{i,j}$ that would result in the same data value $d^n_{i,j}$ when divided by the corresponding quantization value $Q^n_{i,j}$ and rounded to an integer value.

With that, the source data set D can be defined, i.e. the set of all transformed, sub-sampled images that would result in the coefficient data $\vec{d}$ when divided by the quantization matrices Q and rounded to an integer value, as

$$D = \left\{ \vec{z} = \begin{pmatrix} z^1 \\ z^2 \\ z^3 \end{pmatrix}, such\ that\ z_{i,j}^1 \in J_{ij}^1, z_{i,j}^2 \in J_{ij}^2, z_{i,j}^3 \in J_{ij}^3\ for\ all\ i,j \right\}.$$

This is just the set of all coefficient data $\vec{z}$ that would produce the same data matrices $\vec{d}$, when divided by the quantization matrices $\vec{Q}$ and rounded to integer.

For the sake of completeness, the complete set of possible source images, i.e., the set of images that would lead to the same data $\vec{d}$ when JPEG-compression is applied, can now be defined as

$$U_D = \{\vec{u} \in U\ such\ that\ BDCT(S\vec{u}) \in D\},$$

where $BDCT(S\vec{u})$ denotes the resulting data matrices when the component-wise, block-wise discrete cosine transformation operator BDCT is applied to the sub-sampled image $S\vec{u}$ and $S\vec{u}$ denotes the resulting image after color sub-sampling of the image data $\vec{u}$. However, this set U is not directly needed in the TGV-based JPEG-decompression procedure according to the invention.

After abovementioned explanatory remarks about the data $\vec{d}$ and $\vec{Q}$ that can be obtained from a given JPEG object the TGV-based JPEG-decompression process according to the invention is described for color images.

The input of the process is a given JPEG compressed object $J_{comp}$, e.g. digital image data from memory 106. The output is a decompressed image u that may be shown on a display device, e.g. a monitor 108.

In a first step, the first "data formatting" box in Fig. 2, coefficient data d and the quantization matrix Q are obtained from the JPEG object and saved. As already mentioned, the data can be seen as composition of three image-type objects, i.e. $\vec{d} = \begin{pmatrix} d^1 \\ d^2 \\ d^3 \end{pmatrix}$, where the objects differ in size. For instance, the first object may be un-sampled with dimension k and I and the second two objects may have a lower dimension than the first due to color sub-sampling. This, of course, only applies to color images. The quantization matrix can be seen as such a composition, too, i.e.,

$$\vec{Q} = \begin{pmatrix} Q^1 \\ Q^2 \\ Q^3 \end{pmatrix}.$$

Then, the quantization of the foregoing JPEG compression of the digital image data is inverted by multiplying the coefficient data d with the given quantization data Q, point-wise and for each component, and saving it again as coefficient data.

After this step the coefficient data $\vec{d} = \begin{pmatrix} d^1 \\ d^2 \\ d^3 \end{pmatrix}$ is given as follows:

$$d^1 = \begin{pmatrix} d^1_{1,1}Q^1_{1,1} & \cdots & d^1_{1,8l_1-1}Q^1_{1,8l_1-1} \\ \vdots & & \vdots \\ d^1_{8k_1-1,1}Q^1_{8k_1-1,1} & \cdots & d^1_{8k_1-1,8l_1-1}Q^1_{8k_1-1,8l_1-1} \end{pmatrix},$$

$$d^2 = \begin{pmatrix} d^2_{1,1}Q^2_{1,1} & \cdots & d^2_{1,8l_2-1}Q^2_{1,8l_2-1} \\ \vdots & & \vdots \\ d^2_{8k_2-1,1}Q^2_{8k_2-1,1} & \cdots & d^2_{8k_2-1,8l_2-1}Q^2_{8k_2-1,8l_2-1} \end{pmatrix},$$

$$d^3 = \begin{pmatrix} d^3_{1,1}Q^3_{1,1} & \cdots & d^3_{1,8l_3-1}Q^3_{1,8l_3-1} \\ \vdots & & \vdots \\ d^3_{8k_3-1,1}Q^3_{8k_3-1,1} & \cdots & d^3_{8k_3-1,8l_3-1}Q^3_{8k_3-1,8l_3-1} \end{pmatrix}.$$

Pointwise, this step can be written as $d^1_{i,j} = d^1_{i,j}Q^1_{i,j}$, $d^2_{i,j} = d^2_{i,j}Q^2_{i,j}$ and $d^3_{i,j} = d^3_{i,j}Q^3_{i,j}$. The coefficient data d now contains the already dequantized data.

In a next step the image which will be used at the beginning of the following iterative process is initialized. In principle, any initialization of the image data $\vec{u}$ is suitable, as for example $\vec{u} = 0$. However, in order to already start with an image "close" to the desired output a standard-decompressed image is chosen. "Standard-decompression" here means image data that has been decompressed using conventional methods.

For that step, two operations are performed on the dequantized data $\vec{d}$, namely an inverse component-wise block-cosine transformation, denoted by IBDCT $(\vec{d})$, and an up-sampling operation, denoted by $S^{-1}\vec{d}$ which is the pseudo-inversion of the color sub-sampling performed during the compression process. "Pseudo-inversion" here means that the inverse is not bijective, but only right-inverse.

To perform the inverse block-cosine transformation (IBDCT) on given coefficient data $\vec{d}$ each image component is split into blocks of size 8 x 8 pixels and each of these blocks is then processed by an inverse cosine transformation. The resulting 8 x 8 blocks are then temporary stored in IBDCT $(\vec{d})$, which is of the same data type as $\vec{d}$, at the position of the input block. For a given 8 x 8 image block $(z_{i,j})_{0 \le i,j < 8}$, the 8 x 8 block $(IDCT(z)_{i,j})_{0 \le i,j < 8}$ resulting from the IDCT operation is defined pointwise as

$$(IDCT(z))_{i,j} = \sum_{p,q=0}^{7} C_p C_q z_{p,q} \cos\left(\frac{\pi(2i+1)p}{16}\right)\cos\left(\frac{\pi(2j+1)q}{16}\right).$$

The constants Cp and Cq are defined as
$$C_p = \begin{cases} \dfrac{1}{\sqrt{8}} & if\ p = 0, \\ \dfrac{1}{2} & if\ 1 \le p \le 7 \end{cases}$$
and analogously for Cq.

This step is illustrated by an easy example, considering given data $d_1$ of size 16 x 16 written as

$$d_1 = \begin{pmatrix} d_{0,0}^1 & \cdots & d_{0,7}^1 & d_{0,8}^1 & \cdots & d_{0,15}^1 \\ \vdots & & \vdots & \vdots & & \vdots \\ d_{7,0}^1 & \cdots & d_{7,7}^1 & d_{7,8}^1 & \cdots & d_{7,15}^1 \\ d_{8,0}^1 & \cdots & d_{8,7}^1 & d_{8,8}^1 & \cdots & d_{8,15}^1 \\ \vdots & & \vdots & \vdots & & \vdots \\ d_{15,0}^1 & \cdots & d_{15,7}^1 & d_{15,8}^1 & \cdots & d_{15,15}^1 \end{pmatrix}.$$

The inverse block-cosine transformation is then given as

$$IBDCT(d_1) = \begin{pmatrix} IDCT\begin{pmatrix} d_{0,0}^1 & \cdots & d_{0,7}^1 \\ \vdots & & \vdots \\ d_{7,0}^1 & \cdots & d_{7,7}^1 \end{pmatrix} & IDCT\begin{pmatrix} d_{0,8}^1 & \cdots & d_{0,15}^1 \\ \vdots & & \vdots \\ d_{7,8}^1 & \cdots & d_{7,15}^1 \end{pmatrix} \\ IDCT\begin{pmatrix} d_{8,0}^1 & \cdots & d_{8,7}^1 \\ \vdots & & \vdots \\ d_{15,0}^1 & \cdots & d_{15,7}^1 \end{pmatrix} & IDCT\begin{pmatrix} d_{8,8}^1 & \cdots & d_{8,15}^1 \\ \vdots & & \vdots \\ d_{15,8}^1 & \cdots & d_{15,15}^1 \end{pmatrix} \end{pmatrix}$$

with the IDCT-operation performed as defined above.

For the up-sampling $S^{-1}$ it has to be considered that the components $d^1$, $d^2$ and $d^3$ may have been sub-sampled and are saved in a lower resolution than the original image. Hence, the color components $d^1$, $d^2$ and $d^3$ are potentially up-sampled, usually by repeating them up to the image-size.

Also, before the up-sampling process the color image was denoted as composition of three different image matrices while after the sub-sampling it is denoted as a vector-valued matrix. This results from the fact that before the up-sampling the three components may have different size and after up-sampling they all have the same size, making the vector-notation more convenient.

Generally, for given data $\vec{d} = \begin{pmatrix} d^1 \\ d^2 \\ d^3 \end{pmatrix}$ the pointwise assignment of the entries of the up-sampled data $S^{-1}\vec{d}$ matrix is given by

$$(S^{-1}d)^1_{\frac{k}{k_1}i+n,\frac{l}{l_1}j+m} = d^1_{ij} \text{ for i=0 ... 8k}_1\text{-1, j=0 ... 8l}_1\text{-1 and n=0 ... (k/k}_1)\text{-1, m=0 ... (l/l}_1)\text{-1;}$$

$$(S^{-1}d)^2_{\frac{k}{k_2}i+n,\frac{l}{l_2}j+m} = d^2_{ij} \text{ for i=0 ... 8k}_2\text{-1, j=0 ... 8l}_2\text{-1 and n=0 ... (k/k}_2)\text{-1, m=0 ... (l/l}_2)\text{-1;}$$

$$(S^{-1}d)^3_{\frac{k}{k_3}i+n,\frac{l}{l_3}j+m} = d^2_{ij} \text{ for i=0 ... 8k}_3\text{-1, j=0 ... 8l}_3\text{-1 and n=0 ... (k/k}_3)\text{-1, m=0 ... (l/l}_3)\text{-1.}$$

In a forth step a number of variables is defined.

The extragradient image data $\vec{\bar{u}}$ is initialized by the image data $\vec{u}$, the scalars $\sigma$, $\tau$ are chosen arbitrarily such that the condition $\sigma\tau \leq \dfrac{1}{12}$ is satisfied and all other variables are initialized with 0 in all their components. It has to be noted that this is one exemplary initialization; in principle, any initialization is possible. For the extended image data $\vec{v}$, the extragradient extended image data $\vec{\bar{v}}$ and the two-vector valued matrix $\vec{p}$ which are of two-vector matrix type, this can be written as

$$\vec{v} = \left( \begin{pmatrix} 0 \\ 0 \\ 0 \end{pmatrix} \begin{pmatrix} 0 \\ 0 \\ 0 \end{pmatrix} \right)_{0 \leq i < 8k, 0 \leq j < 8l}$$

and analogously for $\vec{\bar{v}}$ and $\vec{p}$

The variable $\vec{q}$ is of the three-vector matrix valued matrix type and looks like

$$\vec{q} = \left( \begin{pmatrix} 0 \\ 0 \\ 0 \end{pmatrix} \begin{pmatrix} 0 \\ 0 \\ 0 \end{pmatrix} \begin{pmatrix} 0 \\ 0 \\ 0 \end{pmatrix} \right)_{0 \leq i < 8k, 0 \leq j < 8l} .$$

The three-vector valued matrix q and the two-vector valued matrix p are the dual data that can be used as input for primal-dual methods.

The following operations A to G are repeated until a stop criterion (see below) is satisfied:

Step A: This step consists of a gradient evaluation 109, a summation/multiplication operation and a projection 110. It processes data stored in $\vec{p}$, $\vec{\bar{u}}$ and $\vec{\bar{v}}$, the result is stored in $\vec{p}$.

The gradient evaluation $\nabla$ maps the extragradient image data $\vec{\bar{u}}$ to a two-vector valued matrix denoted by

$$\nabla\vec{\bar{u}} = \left( \begin{pmatrix} \left(\nabla\vec{\bar{u}}\right)^{1,1}_{i,j} \\ \left(\nabla\vec{\bar{u}}\right)^{2,1}_{i,j} \\ \left(\nabla\vec{\bar{u}}\right)^{3,1}_{i,j} \end{pmatrix}, \begin{pmatrix} \left(\nabla\vec{\bar{u}}\right)^{1,2}_{i,j} \\ \left(\nabla\vec{\bar{u}}\right)^{2,2}_{i,j} \\ \left(\nabla\vec{\bar{u}}\right)^{3,2}_{i,j} \end{pmatrix} \right)_{0 \leq i < 8k, 0 \leq j < 8l}$$

where the entries are defined as follows:

$$\left(\nabla\vec{u}\right)_{i,j}^{n,1} = \left(\delta_{x+}\overline{u}^{n}\right)_{i,j},$$

$$\left(\nabla\vec{u}\right)_{i,j}^{n,2} = \left(\delta_{y+}\overline{u}^{n}\right)_{i,j}$$

for n=1, 2, 3. The operators $\delta_{x+}$ and $\delta_{y+}$, which are defined on a scalar valued matrix $z = (z_{i,j})_{0\le i<8k, 0\le j<8l}$ result again in a scalar valued matrix $((\delta_{x+}z)_{i,j})_{0\le i<8k, 0\le j<8l}$ and $((\delta_{x+}z)_{i,j})_{0\le i<8k, 0\le j<8l}$, respectively, which is given pointwise as

$$\left(\delta_{x+}z\right)_{i,j} = \begin{cases} \left(z_{i+1,j} - z_{i,j}\right) & \text{if } 0 \le i < 8k-1, \\ 0 & \text{if } i = 8k-1, \end{cases} \text{ and}$$

$$\left(\delta_{y+}z\right)_{i,j} = \begin{cases} \left(z_{i,j+1} - z_{i,j}\right) & \text{if } 0 \le j < 8l-1, \\ 0 & \text{if } j = 8l-1. \end{cases}$$

The summation/multiplication operation uses this data and yields a two-vector valued matrix which is stored in p, with its entries being defined pointwise by

$$p_{i,j}^{m,n} = p_{i,j}^{m,n} + \sigma\left(\left(\nabla\vec{u}\right)_{i,j}^{m,n} - \overline{v}_{i,j}^{m,n}\right).$$

The projection step then modifies each two-vector entry of p, denoted by

$$\vec{p}_{i,j} = \left(\begin{pmatrix} (p)_{i,j}^{1,1} \\ (p)_{i,j}^{2,1} \\ (p)_{i,j}^{3,1} \end{pmatrix}, \begin{pmatrix} (p)_{i,j}^{1,2} \\ (p)_{i,j}^{2,2} \\ (p)_{i,j}^{3,2} \end{pmatrix}\right),$$

in a way that its norm, denoted by

$$n1_{i,j} = \left\| \left( \begin{pmatrix} (p)_{i,j}^{1,1} \\ (p)_{i,j}^{2,1} \\ (p)_{i,j}^{3,1} \end{pmatrix}, \begin{pmatrix} (p)_{i,j}^{1,2} \\ (p)_{i,j}^{2,2} \\ (p)_{i,j}^{3,2} \end{pmatrix} \right) \right\|,$$

is less or equal a given $\alpha_1$. As a result, the new entries for the two-vector valued matrix p are given by

$$p_{i,j}^{m,n} = \frac{p_{i,j}^{m,n}}{\max\left\{1, \dfrac{n1_{i,j}}{\alpha_1}\right\}}.$$

A possible choice for the norm $n1_{i,j}$ of the entry $\vec{p}_{i,j}$ is

$$n_{i,j} = \sqrt{\left(p_{i,j}^{1,1}\right)^2 + \left(p_{i,j}^{2,1}\right)^2 + \left(p_{i,j}^{3,1}\right)^2 + \left(p_{i,j}^{1,2}\right)^2 + \left(p_{i,j}^{2,2}\right)^2 + \left(p_{i,j}^{3,2}\right)^2}.$$

Step B: This step is similar to step A. It consists of a higher dimensional gradient evaluation 109, a summation/ multiplication operation and a projection operation 110.

The gradient evaluation $\varepsilon$ maps the extragradient extended image data $\vec{\overline{v}}$ in the form of a two-vector valued matrix to a three-vector valued matrix $\varepsilon\left(\vec{\overline{v}}\right)$ which is defined pointwise by

$$\left(\varepsilon\vec{\overline{v}}\right)_{i,j} = \left( \begin{pmatrix} \left(\delta_{x\_}\overline{v}^{1,1}\right)_{i,j} \\ \left(\delta_{x\_}\overline{v}^{2,1}\right)_{i,j} \\ \left(\delta_{x\_}\overline{v}^{3,1}\right)_{i,j} \end{pmatrix}, \begin{pmatrix} \left(\delta_{y\_}\overline{v}^{1,2}\right)_{i,j} \\ \left(\delta_{y}-\overline{v}^{2,2}\right)_{i,j} \\ \left(\delta_{y\_}\overline{v}^{3,2}\right)_{i,j} \end{pmatrix}, \begin{pmatrix} \left(\dfrac{\delta_{y\_}\overline{v}^{1,1} + \delta_{x\_}\overline{v}^{1,2}}{2}\right)_{i,j} \\ \left(\dfrac{\delta_{y\_}\overline{v}^{2,1} + \delta_{x\_}\overline{v}^{2,2}}{2}\right)_{i,j} \\ \left(\dfrac{\delta_{y\_}\overline{v}^{3,1} + \delta_{x\_}\overline{v}^{3,2}}{2}\right)_{i,j} \end{pmatrix} \right).$$

The *operators* $\delta_{x\_}$, $\delta_{y\_}$ are also defined on scalar valued matrices $z = \left(z_{i,j}\right)_{0\le i<8k,\, 0\le j<8l}$ as

$$(\delta_{x-}z)_{i,j} = \begin{cases} -z_{i-1,j} & \text{if } i = 8k-1 \\ (z_{i,j} - z_{i-1,j}) & \text{if } 0 < i < 8k-1, \\ z_{i,j} & \text{if } i = 0 \end{cases}$$

$$(\delta_{y-}z)_{i,j} = \begin{cases} -z_{i,j-1} & \text{if } i = 8l-1 \\ (z_{i,j} - z_{i,j-1}) & \text{if } 0 < j < 8l-1 \\ z_{i,j} & \text{if } j = 0. \end{cases}$$

The summation/multiplication operation uses this data and yields a three-vector valued matrix which is stored in $\vec{q}$ with its entries being defined pointwise by

$$q_{i,j}^{m,n} = q_{i,j}^{m,n} + \sigma \left( \varepsilon \, \vec{\bar{v}} \right)_{i,j}^{m,n}.$$

The projection step then modifies each three-vector entry of the three-vector valued matrix $\vec{q}$, denoted by

$$\vec{q}_{i,j} = \left( \begin{pmatrix} (q)_{i,j}^{1,1} \\ (q)_{i,j}^{2,1} \\ (q)_{i,j}^{3,1} \end{pmatrix}, \begin{pmatrix} (q)_{i,j}^{1,2} \\ (q)_{i,j}^{2,2} \\ (q)_{i,j}^{3,2} \end{pmatrix}, \begin{pmatrix} (q)_{i,j}^{1,3} \\ (q)_{i,j}^{2,3} \\ (q)_{i,j}^{3,3} \end{pmatrix} \right)$$

in a way that its norm, denoted by

$$n2_{i,j} = \left\| \left( \begin{pmatrix} (q)_{i,j}^{1,1} \\ (q)_{i,j}^{2,1} \\ (q)_{i,j}^{3,1} \end{pmatrix}, \begin{pmatrix} (q)_{i,j}^{1,2} \\ (q)_{i,j}^{2,2} \\ (q)_{i,j}^{3,2} \end{pmatrix}, \begin{pmatrix} (q)_{i,j}^{1,3} \\ (q)_{i,j}^{2,3} \\ (q)_{i,j}^{3,3} \end{pmatrix} \right) \right\|$$

is less or equal a given $\alpha_0$. As result, the new entry is given by

$$q_{i,j}^{m,n} = \frac{q_{i,j}^{m,n}}{\max \left\{ 1, \dfrac{n2_{i,j}}{\alpha_0} \right\}}.$$

A possible choice of the norm $n2_{i,j}$ of the entry $\vec{q}_{i,j}$ is

$$n2_{i,j} = \sqrt{\left(q_{i,j}^{1,1}\right)^2 + \left(q_{i,j}^{2,1}\right)^2 + \left(q_{i,j}^{3,1}\right)^2 + \left(q_{i,j}^{1,2}\right)^2 + \left(q_{i,j}^{2,2}\right)^2 + \left(q_{i,j}^{3,2}\right)^2 + 2\left(\left(q_{i,j}^{1,3}\right)^2 + \left(q_{i,j}^{2,3}\right)^2 + \left(q_{i,j}^{3,3}\right)^2\right)}.$$

Step C: This step evaluates a divergence operator 111, performs a summation/multiplication operation and stores the result in a first new set of image data $\vec{u}_{new}$. The divergence operator uses the two-vector valued matrix $\vec{p}$ as input and results in a vector valued matrix $div\ p$ which is defined pointwise by

$$(div\ \vec{p})_{i,j}^n = \left(\delta_{x-}p^{n,1}\right)_{i,j} + \left(\delta_{y-}p^{n,2}\right)_{i,j},$$

where $\delta_{x-}, \delta_{y-}$ is defined as above. The summation/multiplication step then results in a vector-valued matrix which is stored in $\vec{u}_{new}$, defined pointwise by

$$(u_{new})_{i,j}^n = u_{i,j}^n + \tau(div\ \vec{p})_{i,j}^n.$$

Step D: This step is similar to step C. It evaluates a divergence operator 111, performs a summation/multiplication operation and stores the result in a second new set of image data $\vec{u}_{new}$. The divergence operator uses the three-vector valued matrix $\overleftrightarrow{q}$ as input and results in a two-vector-valued matrix $div\ q$, which is defined pointwise by

$$(div\ \vec{q})_{i,j}^{n,1} = \left(\delta_{x+}q^{n,1}\right)_{i,j} + \left(\delta_{y+}q^{n,3}\right)_{i,j},$$

$$(div\ \vec{q})_{i,j}^{n,2} = \left(\delta_{x+}q^{n,3}\right)_{i,j} + \left(\delta_{y+}q^{n,2}\right)_{i,j}$$

where $\delta_{x+}, \delta_{y+}$ are defined as above. The summation/multiplication step then results in a two vector-valued matrix, which is stored in $\vec{v}_{new}$, defined pointwise by

$$(v_{new})_{i,j}^{m,n} = v_{i,j}^{m,n} + \tau(p + div\ \vec{q})_{i,j}^{m,n}.$$

Step E: This step describes a project-to-data operation which uses the vector-valued matrix $\vec{u}_{new}$ and writes the result $proj_D\ (\vec{u}_{new})$ again to $\vec{u}_{new}$. In order to get the result of this projection-operation, several computations have to be performed. At first, a sub-sampling operation 112 is performed on the first new set of image data $\vec{u}_{new}$ which results in three, temporary stored, scalar-valued matrices $(S\vec{u}_{new})^1, (S\vec{u}_{new})^2, (S\vec{u}_{new})^3$. The entries of these matrices depend on the sub-sampled image size parameters $k_1, k_2, k_3, l_1, l_2, l_3$ and are defined by

$$\left(S\vec{u}_{new}\right)^1_{i,j} = \frac{k_1 l_1}{kl} \sum_{m=i\frac{k}{k_1}}^{(i+1)\frac{k}{k_1}-1} \sum_{n=j\frac{l}{l_1}}^{(j+1)\frac{l}{l_1}-1} \left(u_{new}\right)^1_{n,m} ,$$

$$\left(S\vec{u}_{new}\right)^2_{i,j} = \frac{k_2 l_2}{kl} \sum_{m=i\frac{k}{k_2}}^{(i+1)\frac{k}{k_2}-1} \sum_{n=i\frac{l}{l_2}}^{(i+1)\frac{l}{l_2}-1} \left(u_{new}\right)^2_{n,m} ,$$

$$\left(S\vec{u}_{new}\right)^3_{i,j} = \frac{k_3 l_3}{kl} \sum_{m=i\frac{k}{k_3}}^{(i+1)\frac{k}{k_3}-1} \sum_{n=i\frac{l}{l_3}}^{(i+1)\frac{l}{l_3}-1} \left(u_{new}\right)^3_{n,m} .$$

Using these matrices as input data, a component-wise block-wise discrete cosine transformation 113 is performed and temporary stored in three scalar-valued matrices $(BDCT(S\vec{u}_{new}))^1$, $(BDCT(S\vec{u}_{new}))^2$ and $(BDCT(S\vec{u}_{new}))^3$. This is done by first splitting each scalar-valued input matrix into blocks of size 8 x 8-entries, then applying a discrete cosine transformation (DCT) on each of these 8 x 8 blocks and storing the resulting 8 x 8 block at the same position as the input block in $(BDCT(S\vec{u}_{new}))^n$. For a 8 x 8-block $(z_{i,j})_{0\leq i,j<7}$ the 8 x 8-block $(DCT(z_{i,j}))_{0\leq i,j<7}$ resulting from the discrete cosine transformation is defined pointwise as

$$DCT(z)_{i,j} = C_i C_j \sum_{n,m=0}^{7} z_{n,m} \cos\left(\frac{\pi(2n+1)i}{16}\right)\cos\left(\frac{\pi(2m+1)j}{16}\right),$$

where

$$C_s = \begin{cases} \dfrac{1}{\sqrt{8}} & \text{if } s=0, \\ \dfrac{1}{2} & \text{if } 1\leq s \leq 7 \end{cases} \quad \text{for s=i, j.}$$

The scalar-valued matrices $(BDCT(S\vec{u}_{new}))^n$, n=1, 2, 3, which are denoted as $\vec{dt} = \begin{pmatrix} dt^1 \\ dt^2 \\ dt^3 \end{pmatrix}$, are then processed in a projection operation 114 which results again in three scalar-valued matrices

$$proj_{d,Q}(\vec{dt})_{i,j}^{n} = dt_{i,j}^{n} - \max\left\{0, dt_{i,j}^{n} - d_{i,j}^{n} - \frac{Q_{i,j}^{n}}{2}\right\} + \max\left\{0, d_{i,j}^{n} - \frac{Q_{i,j}^{n}}{2} - dt_{i,j}^{n}\right\}.$$ Using results of the operations IBDCT 115 and $S^{-1}$ 116 as previously defined in a reassembling operation 117, the result of the projection-to-data operation, denoted by $proj_D(\vec{u}_{new})$, is then given pointwise as

$$proj_D(\vec{u}_{new})_{i,j}^{n} = (u_{new})_{i,j}^{n} + \left(S^{-1}\left(IBDCT\left(proj_{d,Q}(\vec{dt})\right) - S\vec{u}_{new}\right)\right)_{i,j}^{n}$$

and stored in $u_{new}$.

**Step F**: The next operation is an extragradient-update step 118. It processes data stored in $\overleftrightarrow{u}$, $\vec{v}$, $\vec{u}_{new}$, $\vec{v}_{new}$ and saves the result in $\vec{\overline{u}}$, $\vec{\overline{v}}$ which are then given pointwise as

$$\overline{u}_{i,j}^{n} = 2(u_{new})_{i,j}^{n} - u_{i,j}^{n},$$

$$\overline{v}_{i,j}^{m,n} = 2(v_{new})_{i,j}^{m,n} - v_{i,j}^{m,n}.$$

**Step G**: In this step, the "old" image data $\vec{u}$ and extended image data $\vec{v}$ is overwritten by the first new set of image data $\vec{u}_{new}$ and the second new set of image data $\vec{v}_{new}$ which is done pointwise by

$$u_{i,j}^{n} = (u_{new})_{i,j}^{n},$$

$$v_{i,j}^{m,n} = (v_{new})_{i,j}^{m,n}.$$

**Step H**: After each iteration of steps A-G a previously defined stopping criterion is tested 119. If the stopping criterion is fulfilled the iterations are halted; if not the iterations are continued and the process starts anew at A.

Possible choices for the stopping criterion are a certain maximal number of iterations, a certain maximal amount of time consumed by the process or a data-dependent criterion like an $\varepsilon$-threshold or the like.

If the stopping criterion is fulfilled the process 120 returns the image saved in $\vec{u}_{new}$ as decompression of the initial digital image data, i.e., the given JPEG-object. With that, the process is stopped.

Vienna,

## Claims

1. Method for the reconstruction of compressed digital image data which has been lossy-compressed by transform coding and quantization, comprising the steps of

a) Inputting JPEG-compressed digital image data ($J_{comp}$);

b) Iteratively performing updates of an extended image model, thereby reducing the total generalized variation functional constrained to all images matching the transform coded, quantized data;

c) Outputting a decompressed digital image (u).

**2.** The method of claim 1, wherein in step b) the extended image model comprises an image, an extended image, a first dual variable and a second dual variable, an extragradient image and an extragradient extended image.

**3.** The method of claim 1 or 2, wherein step b) comprises the following sub-steps:

b0) Initializing image data (u), extended image data (v), extragradient image data ($\bar{u}$), extragradient extended image data ($\bar{v}$), a two-vector valued matrix (p) and a three-vector valued matrix (q) which are used as a starting point for the iteration procedure in steps b1) to b8);

b1) Applying a gradient evaluation and a summation/multiplication operation on the extragradient image data ($\bar{u}$), the extragradient extended image data ($\bar{v}$) and the two-vector valued matrix (p), thereby updating the two-vector valued matrix (p) and then applying a projection operation on said matrix (p) in a way that its norm ($n1_{i,j}$) is less or equal to a first parameter ($\alpha_1$) and each two-vector entry of the two-vector valued matrix (p) is modified accordingly;

b2) Applying a higher dimensional gradient evaluation and a summation/multiplication operation on the extragradient extended image data ($\bar{v}$) and the three-vector valued matrix (q), thereby updating the results in the three-vector valued matrix (q) and then applying a projection operation on said matrix (q) in a way that its norm ($n2_{i,j}$) is less or equal to a second parameter ($\alpha_0$) and each three-vector entry of the three-vector valued matrix (q) is modified accordingly;

b3) Applying a divergence operator and a summation/multiplication operation on the image data (u) and the two-vector valued matrix (p) of step b1), storing the data in a first new set of image data ($u_{new}$);

b4) Applying a divergence operator and a summation/multiplication operation on the extended image data (v), the two-vector valued matrix (p) of step b1) and the three-vector-valued matrix (q) of step b2), storing the data in a second new set of image data ($v_{new}$);

b5) Updating the first new set of image data ($u_{new}$) pf step b3) by applying a sub-sampling operation S, a component-wise block-wise discrete cosine transformation and a projection operation on the first new set of image data, followed by an inverse component-wise block-cosine transformation IBDCT, an up-sampling operation $S^{-1}$ and a summation operation;

b6) Updating the extragradient image data ($\bar{u}$) and the extragradient extended image data ($\bar{v}$) by an extragradient-update step using the image data (u), extended image data (v), first ($u_{new}$) and second new set of image data ($v_{new}$);

b7) Overwriting image data (u) and extended image data (v) with of the first ($u_{new}$) and second new set of image data ($v_{new}$), respectively, resulting from the steps b1) to b6);

b8) Evaluating a stopping-criterion;

b9) Reiterating steps b1) to b8) if stopping criterion is not fulfilled or proceeding to step c) if stopping criterion is fulfilled.

**4.** The method of claim 3, wherein in step b0) a standard-decompressed image is selected, performing an inverse component-wise block-cosine transformation IBDCT and an up-sampling operation $S^{-1}$ on the dequantized data (d).

**5.** Method of claim 3 or 4, wherein in step b1) the gradient-evaluation maps extragradient image data ($\bar{u}$) to a two-vector-valued matrix with the entries being defined as follows:

$$\left(\nabla\vec{\bar{u}}\right)^{n,1}_{i,j} = \left(\delta_{x+}\bar{u}^n\right)_{i,j},$$

and

$$\left(\nabla\vec{\bar{u}}\right)^{n,2}_{i,j} = \left(\delta_{y+}\bar{u}^n\right)_{i,j},$$

with $0 \le i < 8k$ and $0 \le j < 8l$, k and l corresponding to the vertical and horizontal number of 8 x 8 data blocks and n=1, 2, 3, the operators each resulting in a scalar-valued matrix with

$$\left(\delta_{x+}\overline{u}\right)_{i,j} = \begin{cases} \left(\overline{u}_{i+1,j} - \overline{u}_{i,j}\right) & \text{if } 0 \le i < 8k - 1, \\ 0 & \text{if } i = 8k - 1, \end{cases}$$

and

$$\left(\delta_{y+}\overline{u}\right)_{i,j} = \begin{cases} \left(\overline{u}_{i,j+1} - \overline{u}_{i,j}\right) & \text{if } 0 \le j < 8l - 1, \\ 0 & \text{if } j = 8l - 1 \end{cases} \text{ and }$$

the summation/ multiplication operation yields a two-vector valued matrix $\left(p_{i,j}^{m,n}\right)$ with

$$p_{i,j}^{m,n} = p_{i,j}^{m,n} + \sigma\left(\left(\nabla\vec{u}\right)_{i,j}^{m,n} - \overline{v}_{i,j}^{m,n}\right),$$

$\sigma$ being a first scalar and $\overline{v}_{i,j}^{m,n}$ being the extragradient extended image data.

6. Method of any of the claims 3 to 5, wherein in step b1) the modification of the two-vector valued matrix $\left(p_{i,j}^{m,n}\right)$ is calculated with $$p_{i,j}^{m,n} = \frac{p_{i,j}^{m,n}}{\max\left\{1, \frac{n1_{i,j}}{\alpha_1}\right\}},$$ $\alpha_1$ being a first parameter and n1 being a norm.

7. Method of claim 6, wherein the norm ($n1_{i,j}$) is calculated as

$$n1_{i,j} = \sqrt{\left(p_{i,j}^{1,1}\right)^2 + \left(p_{i,j}^{2,1}\right)^2 + \left(p_{i,j}^{3,1}\right)^2 + \left(p_{i,j}^{1,2}\right)^2 + \left(p_{i,j}^{2,2}\right)^2 + \left(p_{i,j}^{3,2}\right)^2} .$$

8. Method of any of the claims 3 to 7, wherein in step b2) the higher dimensional gradient evaluation maps extragradient extended image data ($\overline{v}$) to a three-vector valued matrix being defined as follows:

$$\left(\varepsilon\vec{\bar{v}}\right)_{i,j} = \left(\begin{pmatrix} \left(\delta_{x_-}\bar{v}^{1,1}\right)_{i,j} \\ \left(\delta_{x_-}\bar{v}^{2,1}\right)_{i,j} \\ \left(\delta_{x_-}\bar{v}^{3,1}\right)_{i,j} \end{pmatrix}, \begin{pmatrix} \left(\delta_{y_-}\bar{v}^{1,2}\right)_{i,j} \\ \left(\delta_{y_-}\bar{v}^{2,2}\right)_{i,j} \\ \left(\delta_{y_-}\bar{v}^{3,2}\right)_{i,j} \end{pmatrix}, \begin{pmatrix} \left(\dfrac{\delta_{y_-}\bar{v}^{1,1}+\delta_{x_-}\bar{v}^{1,2}}{2}\right)_{i,j} \\ \left(\dfrac{\delta_{y_-}\bar{v}^{2,1}+\delta_{x_-}\bar{v}^{2,2}}{2}\right)_{i,j} \\ \left(\dfrac{\delta_{y_-}\bar{v}^{3,1}+\delta_{x_-}\bar{v}^{3,2}}{2}\right)_{i,j} \end{pmatrix}\right),$$

the operators being defined as

$$\left(\delta_{x_-}\bar{v}\right)_{i,j} = \begin{cases} -\bar{v}_{i-1,j} & \text{if } i = 8k-1 \\ \left(\bar{v}_{i,j}-\bar{v}_{i-1,j}\right) & \text{if } 0 < i < 8k-1 \\ \bar{v}_{i,j} & \text{if } i = 0 \end{cases} \quad \text{and} \quad \left(\delta_{y_-}\bar{v}\right)_{i,j} = \begin{cases} -\bar{v}_{i,j-1} & \text{if } i = 8l-1 \\ \left(\bar{v}_{i,j}-\bar{v}_{i,j-1}\right) & \text{if } 0 < j < 8l-1, \\ \bar{v}_{i,j} & \text{if } j = 0. \end{cases} \quad \text{and}$$

the summation/multiplication operation yields a three-vector valued matrix $\left(q_{i,j}^{m,n}\right)$ with

$$q_{i,j}^{m,n} = q_{i,j}^{m,n} + \sigma\left(\varepsilon\vec{\bar{v}}\right)_{i,j}^{m,n}.$$

9. Method of any of the claims 3 to 8, wherein in step b2) the modification of the three-vector valued matrix $\left(q_{i,j}^{m,n}\right)$

is calculated with $\quad q_{i,j}^{m,n} = \dfrac{q_{i,j}^{m,n}}{\max\left\{1,\dfrac{n2_{i,j}}{\alpha_0}\right\}},\quad$ $\alpha_0$ being a second parameter and n2 being a norm.

10. Method of claim 9, wherein the norm ($n2_{i,j}$) is calculated with

$$n2_{i,j} = \sqrt{\left(q_{i,j}^{1,1}\right)^2 + \left(q_{i,j}^{2,1}\right)^2 + \left(q_{i,j}^{3,1}\right)^2 + \left(q_{i,j}^{1,2}\right)^2 + \left(q_{i,j}^{2,2}\right)^2 + \left(q_{i,j}^{3,2}\right)^2 + 2\left(\left(q_{i,j}^{1,3}\right)^2 + \left(q_{i,j}^{2,3}\right)^2 + \left(q_{i,j}^{3,3}\right)^2\right)}.$$

11. Method of any of the claims 3 to 10, wherein in step b3) a divergence operator is applied to the two-vector valued matrix $\left(p_{i,j}^{m,n}\right)$ of step b1) as follows: $\left(div\ \vec{p}\right)_{i,j}^n = \left(\delta_{x_-}p^{n,1}\right)_{i,j} + \left(\delta_{y_-}p^{n,2}\right)_{i,j}$, and the summation/multiplication operation yields a first new set of image data ($\vec{u}_{new}$) as a vector-valued matrix with $\left(u_{new}\right)_{i,j}^n = u_{i,j}^n + \tau\left(div\ \vec{p}\right)_{i,j}^n$, $\tau$ being a second scalar

12. Method of any of the claims 3 to 11, wherein in step b4) a divergence operator is applied to the three-vector valued matrix $\left(q_{i,j}^{m,n}\right)$ of step b2) as follows:

$$(div\,\vec{q})_{i,j}^{n,1} = \left(\delta_{x+}q^{n,1}\right)_{i,j} + \left(\delta_{y+}q^{n,3}\right)_{i,j},$$

$$(div\,\vec{q})_{i,j}^{n,2} = \left(\delta_{x+}q^{n,3}\right)_{i,j} + \left(\delta_{y+}q^{n,2}\right)_{i,j}$$

and the summation/multiplication operation yields a second new set of image data ($\vec{v}_{new}$) as a two-vector valued matrix with

$$(v_{new})_{i,j}^{m,n} = v_{i,j}^{m,n} + \tau\left(\vec{p} + div\,\vec{q}\right)_{i,j}^{m,n}.$$

13. Method of any of the claims 5 to 12, wherein the first ($\sigma$) and the second scalar ($\tau$) satisfy the condition $\sigma\tau \le \dfrac{1}{12}$.

14. Method of any of the claims 3 to 13, wherein in step b5) a sub-sampling operation is applied to the first new set of image data ($\vec{u}_{new}$) resulting in scalar-valued matrices as follows:

$$\left(S\,\vec{u}_{new}\right)_{i,j}^{1} = \frac{k_1 l_1}{kl} \sum_{m=i\frac{k}{k_1}}^{(i+1)\frac{k}{k_1}-1} \sum_{n=j\frac{l}{l_1}}^{(j+1)\frac{l}{l_1}-1} \left(u_{new}\right)_{n,m}^{1},$$

$$\left(S\,\vec{u}_{new}\right)_{i,j}^{2} = \frac{k_2 l_2}{kl} \sum_{m=i\frac{k}{k_2}}^{(i+1)\frac{k}{k_2}-1} \sum_{n=i\frac{l}{l_2}}^{(i+1)\frac{l}{l_2}-1} \left(u_{new}\right)_{n,m}^{2},$$

$$\left(S\vec{u}_{new}\right)_{i,j}^{3} = \frac{k_3 l_3}{kl} \sum_{m=i\frac{k}{k_3}}^{(i+1)\frac{k}{k_3}-1} \sum_{n=i\frac{l}{l_3}}^{(i+1)\frac{l}{l_3}-1} \left(u_{new}\right)_{n,m}^{3}$$

with $k_1$, $k_2$, $k_3$, $l_1$, $l_2$, $l_3$ being the sub-sampled image size parameters, then a component-wise block-wise discrete cosine transformation is performed resulting in scalar-valued matrices $(BDCT(\vec{Su}_{new}))^1$, $(BDCT(\vec{Su}_{new}))^2$ and $(BDCT(\vec{Su}_{new}))^3$ which are then processed in a projection operation with

$$proj_{d,Q}\left(BDCT\left(S\vec{u}_{new}\right)\right)_{i,j}^{n} = BDCT\left(S\vec{u}_{new}\right)_{i,j}^{n} - \max\left\{0, BDCT\left(S\vec{u}_{new}\right)_{i,j}^{n} - \left(d_{i,j}^{n} + \frac{1}{2}\right)Q_{i,j}^{n}\right\} +$$

for

$$+ \max\left\{0, \left(d_{i,j}^{n} - \frac{1}{2}\right)Q_{i,j}^{n} - BDCT\left(S\vec{u}_{new}\right)_{i,j}^{n}\right\}$$

n=1, 2, 3, resulting in three scalar-valued matrices which are then inversely transformed IBDCT and inversely sub-sampled $S^{-1}$, resulting in

$$proj_{D}\left(\vec{u}_{new}\right)_{i,j}^{n} = \left(u_{new}\right)_{i,j}^{n} + \left(S^{-1}\left(IBDCT\left(proj_{d,Q}\left(\left(S\vec{u}_{new}\right)\right)\right) - S\vec{u}_{new}\right)\right)_{i,j}^{n}$$

which is then stored as first new set of image data $(\vec{u}_{new})$.

**15.** Method of any of the claims 3 to 14, wherein the extragradient update-step is performed by processing image data $(\vec{u},\vec{v})$ and the first $(\vec{u}_{new})$ and second new set of image data $(\vec{v}_{new})$ as follows:

$$\overline{u}_{i,j}^{n} = 2\left(u_{new}\right)_{i,j}^{n} - u_{i,j}^{n},$$

$$\overline{v}_{i,j}^{m,n} = 2\left(v_{new}\right)_{i,j}^{m,n} - v_{i,j}^{m,n}$$

resulting in new sets of extragradient image data ($\vec{u}$) and extragradient extended image data ($\vec{v}$).

**16.** Method of any of the preceding claims, wherein the JPEG-compressed digital image data ($J_{comp}$) is

- a greyscale image consisting of a matrix ($u_{i,j}$), each matrix element indicating the intensity of the respective pixel, or

- a color image in an RGB-color-space-setting consisting of a three-vector valued matrix $\left(\left(\vec{u}_{i,j}\right) = \begin{pmatrix} u_{i,j}^{1} \\ u_{i,j}^{2} \\ u_{i,j}^{3} \end{pmatrix}\right)$,

each matrix vector indicating the amount of Red, Green and Blue light in the corresponding (i, j)-th pixel of the image, or

- a color image in an YCbCr-color-space-setting consisting of a three-vector valued matrix $\left(\left(\vec{u}_{i,j}\right) = \begin{pmatrix} u_{i,j}^{1} \\ u_{i,j}^{2} \\ u_{i,j}^{3} \end{pmatrix}\right)$,

the matrix vectors indicating the brightness, the blue-difference and the red-difference of the corresponding pixel.

Vienna,

Prior Art
Fig. 1A

Prior Art
Fig. 1B

Fig. 2

Europäisches
Patentamt

European
Patent Office

Office européen
des brevets

**EUROPEAN SEARCH REPORT**

Application Number

EP 11 16 9835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. Holler, K. Bredies: "A Total-Variation-based JPEG decompression model (SFB-Report No. 2011-010)", SFB Research Center, Mathematical Optimization and Applications in Biomedical Sciences , 31 May 2011 (2011-05-31), XP002661162, Retrieved from the Internet: URL:http://www.kfunigraz.ac.at/imawww/mobis/publications/SFB-Report-2011-010.pdf [retrieved on 2011-10-12] * abstract * * section 5 * ----- | 1-15 | INV. H04N7/26 H04N7/30 G06T5/00 |
| X | M. Holler: "Accelerating a TV based JPEG decompression algorithm with Cuda", Projects in Ph.D. seminar: High Performance Computing I , 27 February 2011 (2011-02-27), XP002661163, Retrieved from the Internet: URL:http://www.kfunigraz.ac.at/˜haasegu/Lectures/GPU_CUDA/WS10/Reports/texreport_holler.pdf [retrieved on 2011-10-12] * page 1 - page 5 * ----- | 1-15 | |
| | -/-- | | TECHNICAL FIELDS SEARCHED (IPC) H04N G06T |

The present search report has been drawn up for all claims

| Place of search | Date of completion of the search | Examiner |
|---|---|---|
| The Hague | 17 October 2011 | Streich, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 16 9835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANÇOIS ALTER ET AL: "Adapted Total Variation for Artifact Free Decompression of JPEG Images", JOURNAL OF MATHEMATICAL IMAGING AND VISION, KLUWER ACADEMIC PUBLISHERS, BO, vol. 23, no. 2, 1 September 2005 (2005-09-01), pages 199-211, XP019209111, ISSN: 1573-7683, DOI: 10.1007/S10851-005-6467-9 | 1 | |
| A | * abstract * <br> * section 7 * | 2-15 | |
| X | EP 2 226 760 A1 (SONY CORP [JP]) 8 September 2010 (2010-09-08) | 1 | |
| A | * abstract * <br> * paragraph [0009] * <br> * paragraph [0031] - paragraph [0045] * | 2-15 | |
| A | CHAN T F ET AL: "A nonlinear primal-dual method for total variation-based image restoration", SIAM JOURNAL ON SCIENTIFIC COMPUTING, SOCIETY FOR INDUSTRIAL AND APPLIED MATHEMATICS, US, vol. 20, no. 6, 1 January 1999 (1999-01-01), pages 1964-1977, XP002539620, ISSN: 1064-8275, DOI: 10.1137/S1064827596299767 * abstract * * section 4 * | 1-15 | TECHNICAL FIELDS SEARCHED (IPC) |

The present search report has been drawn up for all claims

| Place of search | Date of completion of the search | Examiner |
|---|---|---|
| The Hague | 17 October 2011 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 9835

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2011

| Patent document cited in search report | Publication date | Patent family member(s) | Publication date |
|---|---|---|---|
| EP 2226760 A1 | 08-09-2010 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5534925 A

### Non-patent literature cited in the description

- **BREDIES et al.** Total Generalized Variation. *Society for Industrial and applied Mathematics - J. Imaging Sciences,* 2010, vol. 3 (3), 492-526

- **CHAMBOLLE ; POCK.** A first-order primal-dual algorithm for convex problems with applications in imaging. *Journal of Mathematical Imaging and Vision,* vol. 40 (1), 120-145